# EUROPÄISCHE PATENTSCHRIFT

(11) **EP 1 325 578 B1**
(45) Veröffentlichungstag und Bekanntmachung des Hinweises auf die Patenterteilung: **20.04.2005**
(21) Anmeldenummer: 01978107.9
(22) Anmeldetag: 10.09.2001
(51) Int. Cl.: H04J 3/06, H04L 12/413, G05B 19/418

(54) **VERFAHREN ZUM GESTEUERTEN EINSYNCHRONISIEREN AUF EIN NICHT STABILES TAKTSYSTEM UND HIERMIT KORRESPONDIERENDE EMPFANGSEINHEIT**
METHOD FOR EFFECTING THE CONTROLLED SYNCHRONIZATION ON AN UNSTABLE CLOCK PULSE SYSTEM, AND A CORRESPONDING RECEIVING UNIT
PROCEDE DE SYNCHRONISATION COMMANDEE SUR UN SYSTEME D'HORLOGE NON STABLE ET UNITE DE RECEPTION CORRESPONDANTE

(30) Priorität: 21.09.2000 DE 10046920
(43) Veröffentlichungstag der Anmeldung: 09.07.2003
(73) Patentinhaber: SIEMENS AKTIENGESELLSCHAFT, 80333 München (DE)
(72) Erfinder: ROTSCH, Hendrik, 04774 Luppa (DE); WANNER, Dietmar, 91058 Erlangen (DE)
(86) Internationale Anmeldenummer: PCT/DE2001/003471
(87) Internationale Veröffentlichungsnummer: WO 2002/027990

(56) Entgegenhaltungen:
- EP-A- 0 652 642
- DE-A- 19 932 635
- US-A- 5 748 569

## Beschreibung

Die vorliegende Erfindung bezieht sich auf ein Synchronisierverfahren für eine Empfangseinheit, wobei der Empfangseinheit von einer Sendeeinheit zyklisch ausgesandte Synchronisationssignale übermittelt werden, wobei die Empfangseinheit die Synchronisationssignale einem ersten Taktgeber zuführt, wobei der erste Taktgeber zwischen zwei Synchronisationssignalen eine im wesentlichen stabile Anzahl von Taktsignalen ausgibt, sowie eine hiermit korrespondierende Empfangseinheit.

Derartige Synchronisierverfahren und die korrespondierenden Empfangseinheiten sind allgemein bekannt. Sie werden unter anderem in Feldbussystemen, z.B. dem PROFIBUS, eingesetzt. Solche Feldbussyteme sind verteilte Steuerungssysteme, die in der Regel eine Sendeeinheit (Kopfbaugruppe, Busmaster) und eine Vielzahl von Empfangseinheiten (Slaves) aufweisen. Die Ansteuerung der einzelnen Slavebaugruppen geschieht in der Regel dadurch, dass die Sendeeinheit den Empfangseinheiten ein Befehlstelegramm übermittelt. Bei Empfang des Befehlstelegramms geben die Empfangseinheiten Sollwerte an eine gesteuerte technische Anlage aus, die ihnen zuvor von der Sendeeinheit übermittelt worden sind. Gleichzeitig lesen sie Istwerte von der gesteuerten technischen Anlage ein, welche sie nachfolgend an die Sendeeinheit übermitteln. Die Sendeeinheit errechnet dann neue Sollwerte, die sie den einzelnen Empfangseinheiten übermittelt, so dass diese für das nächste Befehlstelegramm bereit sind.

Die Befehlstelegramme werden von der Sendeeinheit zeitlich äquidistant gesendet. Aus den Befehlstelegrammen sind daher Synchronisationssignale ableitbar, mittels derer die Empfangseinheiten mit der Sendeeinheit synchronisierbar sind.

In der Praxis verbleibt zwischen dem Übermitteln der eingelesenen Istwerte an die Sendeeinheit und dem Übermitteln der Sollwerte an die Empfangseinheiten einerseits und dem Übermitteln des nächsten Befehlstelegramms andererseits ein zeitlicher Spielraum. Dieser wird in der Regel für sogenannte azyklische Telegramme genutzt. Hierbei kann es geschehen, dass aufgrund von Verzögerungen durch die azyklischen Telegramme einzelne Befehlstelegramme verspätet gesendet werden. Der Empfang derart verspätet gesendeter Befehlstelegramme bewirkt eine fehlerhafte Nachsynchronisation der Empfangseinheiten. Bei vielen Anwendungen ist diese fehlerhafte Nachsynchronisation unkritisch.

Bei zeitkritischen Anwendungen hingegen, insbesondere bei der Kopplung interpolierender Antriebsachsen, ist eine derartige fehlerhafte Nachsynchronisation nicht tolerierbar. Zu deren Vermeidung ist daher ein Phasenregler vorgeschlagen worden, indem die Empfangseinheit die Synchronisationssignale dem ersten Taktgeber über diesen Phasenregler einer phasenverriegelten Schleife zuführt, wobei der Phasenregler beim Empfang der Synchronisationssignale momentane Phasenfehler ermittelt und den ersten Taktgeber derart nachregelt, dass der erste Taktgeber zwischen zwei Synchronisationssignalen eine Sollanzahl von Taktsignalen ausgibt. Um eine hinreichende Genauigkeit der Synchronisierung mit der Sendeeinheit zu erreichen, ist vorgeschlagen worden, dass der Phasenregler die momentanen Phasenfehler zu einem Integrationswert aufintegriert und dass der Integrationswert zu einem Integrationsbruchteil ausgeregelt wird, wobei der Integrationsbruchteil kleiner als eins ist (vgl. DE 19932635.5).

Der Phasenregler der phasenverriegelten Schleife (PLL) generiert im wesentlichen aus einem über das Feldbussystem empfangenen Synchronisationssignal, welches mit Störungen behaftet ist, ein stabiles Taktsignal. Fällt dieses über das Feldbussystem empfangene Synchronisationssignal dauerhaft aus (z.B. keine Busverbindung mehr vorhanden), so erzeugt der Phasenregler weiterhin ein stabiles Taktsignal, allerdings ohne sich auf das Synchronisationssignal auf dem Feldbussystem synchronisieren zu können.

Ist nach einiger Zeit das über den Feldbus empfangene Synchronisationssignal wieder dauerhaft vorhanden (z.B. Busverbindung wieder hergestellt) wird in der Regel dieses Synchronisationssignal völlig asynchron zu dem von dem Phasenregler erzeugten stabilen Taktsignal liegen. Wird in diesem Fall der Phasenregler gestoppt, so fallen die von der PLL erzeugten stabilen Takte aus. Wird der Phasenregler wieder neu gestartet, so werden die von der PLL erzeugten stabilen Takte wieder synchron zu dem über den Feldbus empfangenen Synchronisationssignal erzeugt.

Diese herkömmliche Verfahrensweise ist jedoch problematisch im Hinblick auf Anforderungen von verschiedenen Anwendungen wie z.B. der Kopplung interpolierender Antriebsachsen. Der synchrone Betrieb von verschiedenen Achsen, z.B. bei numerisch gesteuerten Werkzeugmaschinen oder Robotern, hängt von dem von der PLL erzeugten stabilen Taktsignal ab. Istwerte werden z.B. synchron mit diesem Takt gespeichert und Sollwerte ausgegeben.

Der Ausfall des von der PLL erzeugten Taktsignals hat dann jedoch zur Folge, dass die Werkzeugmaschine die Position ihrer Achsen nicht mehr bestimmen kann und dass der Maschinenbediener seine Achsen wieder neu referenzieren muss.

Darum ist es aus Applikationssicht wünschenswert, dass eine Neusynchronisierung ohne Ausfall der von der PLL erzeugten stabilen Takte erfolgen kann.

Das Einsynchronisieren auf das vom Feldbus empfangene Synchronisationssignal sollte demnach weich, d.h. nur durch geringfügige Änderung des von der PLL erzeugten stabilen Taktssignals erfolgen.

Aus JAPAN ABSTRACT zu JP 094-157 924 A ist eine Synchronisierverfahren der eingangs genannten Art bekannt, das den Zweck hat, eine verlorene Synchronisation wieder zu gewinnen. Dazu sind allerdings zwei PLL-Schaltkreise vorgesehen, die parallel geschaltet sind. Im normalen Betrieb folgt die erste PLL einem Eingangssignal, während die zweite PLL der ersten PLL folgt. Fällt ein diesbezügliches Steuersignal aus, wird damit allerdings die komplette Struktur dieser Dual-PLL geändert. Dadurch gibt es keine zwei PLLs mehr, sondern es wird eine einzige "große" PLL gebildet. Dieser Stand der Technik zeigt somit keine Abkopplung eines zweiten Taktgebers von einem ersten Taktgeber. Vielmehr werden beide Taktgeber zu einem neuen gemeinsamen Taktgeber unkonfiguriert. In anderen Worten kann auch gesagt werden, dass aus diesem Stand der Technik zwar das Vorhandensein eines zweiten Taktgebers, der einer ersten PLL folgt, bekannt ist, jedoch wird dieser zweite Taktgeber nicht als autonome Takteinheit abgekoppelt, sofern das übergeordnete Synchronisationssignal ausfällt. Dies führt ursächlich dazu, dass die komplette Struktur dieses Dual-PLL geändert wird.

Aus der Europäischen Offenlegungsschrift 0 652 642 A1 ist eine Frequenzsyntesizer-Schaltung bekannt, wobei mit Hilfe zweier PLL-Glieder ein stabiles Taktsignal erzeugt wird.

Aus der US-Patentschrift 5,748,569 ist ein Telekommunikationssystem bekannt, bei dem mit Hilfe von drei PLL-Gliedern aus zwei redundanten Zeitsignalen ein stabiles Zeitsignal erzeugt wird.

Die Aufgabe der vorliegenden Erfindung besteht darin, ein Synchronisierverfahren und eine eine Empfangseinheit zu schaffen, mit dem ein weiches Einsynchronisieren auf ein nicht stabiles Taktsystem ermöglicht wird.

Gemäß der vorliegenden Erfindung wird diese Aufgabe dadurch gelöst, dass das eingangs beschriebene Synchronisationsverfahren gemäß dem Oberbegriff des Hauptanspruchs dadurch weitergebildet wird, dass dass der zweite Taktgeber im Falle des Ausbleibens des ersten stabilen Taktsignals vom ersten Taktgeber abgekoppelt wird, indem der zweite Taktgeber (7') mit einer vorgegebenen Standardperiodendauer angesteuert wird und so ein auch bei Ausbleiben der ersten stabilen Taktsignale stets vorhandenes zweites Taktsignal (a) generiert.

Weiterhin wird diese Aufgabe durch eine Empfangseinheit gelöst,
wobei die Empfangseinheit einen ersten Taktgeber und einen zweiten Taktgeber umfasst,
- wobei die Empfangseinheit zyklisch ausgesandte Synchronisationssignale erhält,
- wobei die Empfangseinheit die Synchronisationssignale dem ersten Taktgeber zuführt,
- wobei der erste Taktgeber zwischen zwei Synchronisationssignalen eine im wesentlichen stabile Anzahl von Taktsignalen ausgibt,
- wobei diese stabilen Taktsignale dem zweiten Taktgeber zur Ansteuerung dienen,
- wobei eine zwischen dem ersten und zweiten Taktgeber auftretende Phasendifferenz durch Beeinflussung der Periodendauer des zweiten Taktgebers ausgeglichen wird
- wobei der zweite Taktgeber im Falle des Ausbleibens des ersten stabilen Taktsignals vom ersten Taktgeber abgekoppelt wird, indem der zweite Taktgeber mit einer vorgegebenen Standardperiodendauer angesteuert wird und so ein auch bei Ausbleiben der ersten stabilen Taktsignale stets vorhandenes zweites Taktsignal generiert.

Durch das weiche Einsynchronisieren behalten die erzeugten Taktsignale weitgehend ihre Periodendauer, so dass sichergestellt ist, dass mit diesem Takt zyklisch aufgerufene Anwendungen wie etwa Software-Applikationen auch vollständig abgearbeitet werden können. Da die Taktsignale weitgehend ihre Periodendauer erhalten, bleibt auch die Applikation hinreichend genau. Insbesondere bei zeitkritischen Stellen wie Berechnungen von Geschwindigkeiten etc. ergeben sich hierbei große Vorteile gegenüber einer geregelten Lösung. Der Vorgang des weichen Einsynchronisierens unterscheidet sich somit kaum vom normalen Betriebszustand der Maschine.

Dabei hat es sich als vorteilhaft erwiesen, wenn lediglich geringfügige Änderungen der Periodendauer des zweiten Taktgebers so vorgenommen werden, dass die Phasendifferenz innerhalb einer vorgegebenen Zeitdauer stetig verkleinert wird bis das erste und das zweite Taktsignal zueinander synchron sind.

Auf diese Weise erfolgt der Vorgang des Einsynchronisierens besonders weich.

Besonders effektiv erfolgt das Einsynchronisieren, wenn die Periodendauer des zweiten Taktgebers so beeinflusst wird, dass der kürzere Abstand der Phasen der beiden Taktsignale reduziert wird.

Weiterhin hat es sich als vorteilhaft erwiesen, dass der zweite Taktgeber im Falle des Ausbleibens des ersten stabilen Taktsignals mit einer vorgegebenen Standardperiodendauer angesteuert. Dadurch wird erreicht, dass auch bei Ausfall des Synchronisationssignals ein autarker Betrieb der Anwendung möglich ist.

Beim Einsatz eines eingangs geschilderten Phasenreglers einer verriegelten Schleife (PLL) zur Erzeugung eines ersten stabilen Taktsignals lässt sich die Erfindung besonders einfach und effektiv realisieren, wenn vom Phasenregler ausgeregelte Schwankungen der Periodendauer des ersten Taktgebers auf den zweiten Taktgeber abgebildet werden.

Dabei hat es sich als günstig erwiesen, wenn die vom Phasenregler von Takt zu Takt ermittelten Korrekturen der Periodendauer des ersten Taktgebers sowohl in dem ersten stabilen Taktsignal als auch in dem stets vorhandenen zweiten Taktsignal berücksichtigt werden.

Weitere Vorteile und Details der Erfindung ergeben sich aus der nachfolgenden Beschreibung eines vorteilhaften Ausführungsbeispiels und in Verbindung mit den Figuren. Dabei sind Elemente mit gleicher Funktionalität mit den gleichen Bezugszeichen gekennzeichnet. Es zeigen in Prinzipdarstellung:
- FIG 1: ein verteiltes Steuerungssystem,
- FIG 2: eine Empfangseinheit,
- FIG 3: eine phasenverriegelte Schleife mit nachgeschaltetem gesteuertem Taktgeber und
- FIG 4: ein Zeitdiagramm der gesteuerten Einsynchronisierung.

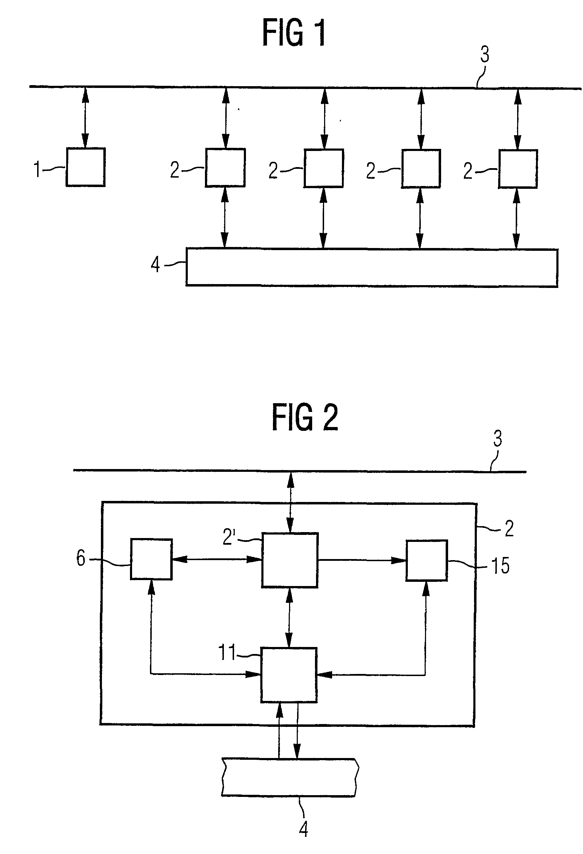

Gemäß FIG 1 weist ein verteiltes Steuerungssystem eine Sendeeinheit 1 und Empfangseinheiten 2 auf, die über ein Bussystem 3 miteinander verbunden sind. Die Sendeeinheit 1 sendet zyklisch Telegramme an die Empfangseinheiten 2, welche entsprechend auf die empfangenen Telegramme reagieren. Beispielsweise lesen die Empfangseinheiten 2 von einer gesteuerten technischen Anlage bzw. Applikation 4 Eingangsgrößen ein und geben Ausgangsgrößen an die technische Anlage bzw. Applikation 4 aus. Dies ist in FIG 1 durch die Pfeile zwischen den Empfangseinheiten 2 und der technischen Anlage/Applikation 4 angedeutet.

Die Kommunikation zwischen der Sendeeinheit 1 und den Empfangseinheiten 2 erfolgt in der Regel nach folgendem, zyklisch abgearbeiteten Schema:

Zunächst übermittelt die Sendeeinheit 1 den Empfangseinheiten 2 Ausgangsgrößen, die an die technische Anlage/Applikation 4 ausgegeben werden sollen. Dann übermittelt sie ein Befehlstelegramm an die Empfangseinheiten 2. Bei Übermittlung des Befehlstelegramms geben die Empfangseinheiten 2 die Ausgangsgrößen an die technische Anlage 4 aus und lesen Eingangsgrößen von der technischen Anlage 4 ein. Sodann werden die eingelesenen Eingangsgrößen von der Sendeeinheit 1 abgefragt.

Im Idealfall wird das obenstehende Schema streng zyklisch und zeitlich streng äquidistant abgearbeitet. Insbesondere die Befehlstelegramme können daher als Synchronisationssignale S verwendet werden bzw. aus den Befehlstelegrammen Synchronisationssignale S abgeleitet werden. Mittels der Synchronisationssignale S können sich dann die Empfangseinheiten 2 mit der Sendeeinheit 1 synchronisieren.

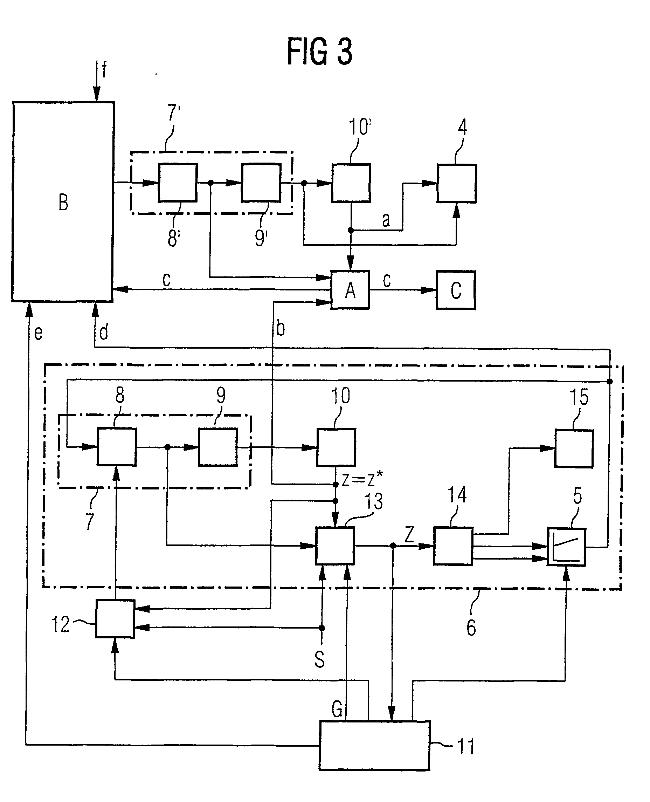

Die von den Empfangseinheiten 2 empfangenen Synchronisationssignale werden gemäß FIG 2 und 3 über einen Busanschlussbaustein 2' einem Phasenregler 5 einer phasenverriegelten Schleife 6 zugeführt. Die phasenverriegelte Schleife 6 weist einen Taktgeber 7 auf. Innerhalb des Taktgebers 7 erzeugt ein Taktgenerator s Primärtaktsignale, die einem Frequenzteiler 9 zugeführt werden. Ausgangsseitig gibt der Frequenzteiler 9 die heruntergeteilten Primärtaktsignale als Taktsignale aus. Die Taktsignale werden einem Taktsignalzähler 10 zugeführt.

Bei idealer Regelung des Taktgenerators 8 gibt der Taktgeber 7 zwischen zwei Synchronisationssignalen S exakt eine Sollanzahl Z* von Taktsignalen aus. In der Regel gibt der Taktgeber 7 aber eine Anzahl Z von Taktsignalen aus, welche von der Sollanzahl Z* abweicht. Der Phasenregler 5 ermittelt daher beim Empfang der Synchronisationssignale momentane Phasenfehler z und regelt dann den Taktgeber 7 derart nach, dass er zwischen zwei Synchronisationssignalen S die Sollanzahl Z* von Taktsignalen ausgibt. Dies geschieht wie folgt:

Vor Beginn der Synchronisation, also vor der Ermittlung des ersten momentanen Phasenfehlers z, wird zunächst von einer Steuereinheit 11 einer Ansteuereinheit 12 ein Startsignal vorgegeben. Diese steuert daraufhin den Taktgenerator 8 des Taktgebers 7 an. Wenn der Taktsignalzähler 10 die Sollanzahl Z* von Taktsignalen gezählt hat, übermittelt der Taktsignalzähler 10 ein Signal an die Ansteuereinheit 12. Diese hält daraufhin den Taktgenerator 8 wieder an. Die phasenverriegelte Schleife 6 ist dadurch sozusagen "vorgespannt". Beim Empfang des nächsten Synchronisationssignals, das ebenfalls an die Ansteuereinheit 12 übermittelt wird, startet diese dann den Taktgenerator 8 wieder. Dadurch wird der Taktsignalzähler 10 neu hochgezählt,

Das Erreichen der Sollanzahl Z* sowie das Eintreffen des nächsten Synchronisationssignals S wird an einen Primärtaktzähler 13 gemeldet. Beim Eintreffen des ersten dieser beiden Signale wird der Primärtaktzähler 13 gestartet, beim Eintreffen des zweiten der beiden Signale gestoppt. Der (vorzeichenbehaftete) Zählerstand des Primärtaktzählers 13 ist somit ein direktes Maß für den Fehler zwischen der Taktung des Taktgebers 7 und der Periodizität der Synchronisationssignale S.

Beim Empfang des ersten Synchronisationssignals S nach dem Wiederstarten des Taktgebers 7 wird der Zählerstand des Primärtaktzählers 13 an die Steuereinheit 11 übermittelt. Diese errechnet daraus einen Korrekturwert für die Ansteuerung des Taktgenerators 8 und gibt diesen Korrekturwert direkt dem Phasenregler 5 vor. Dadurch wird der beim ersten Synchronisationszyklus detektierte momentane Phasenfehler z zumindest im wesentlichen ausgeregelt.

In den weiteren Synchronisationszyklen wird der Primärtaktzähler 13 stets in Abhängigkeit vom Synchronisationssignal S und dem Erreichen der Sollanzahl Z* gesteuert. Beim Eintreffen des ersten dieser beiden Signale wird der Primärtaktzähler 13 gestartet und beim Eintreffen des zweiten dieser beiden Signale gestoppt. Der Zählerstand des Primärtaktzählers 13 wird einem Vergleicher 14 zugeführt.

Der Zählerstand des Primärtaktzählers 13 wird betragsmäßig mit einem Maximalfehler verglichen. Wenn der Zählerstand den Maximalfehler übersteigt, wird ein Auszeitzähler 15 hochgezählt. In diesem Fall wird an den Phasenregler 5 kein Fehlersignal ausgegeben. Der Phasenregler 5 behält sein bisheriges Ausgangssignal bei.

In der Regel wird der Primärtaktzähler 13 bei jeder Übermittlung eines Synchronisationssignals S gestartet bzw. gestoppt. Es ist aber auch möglich, der phasenverriegelten Schleife 6 zusätzlich von der Steuereinheit 11 ein Gültigkeitssignal G zu übermitteln. In diesem Fall wird der Primärtaktzähler 13 nur dann gestartet und gestoppt, wenn das Gültigkeitssignal G anliegt. Es ist ferner möglich, den Primärtaktzähler 13 um einen Phasenversatz bezüglich des Synchronisationssignals S versetzt zu starten und auszuwerten.

Wenn der Phasenregler die momentanen Phasenfehler zu einem Proportionalbruchteil ausregelt., wobei der Proportionalbruchteil kleiner als eins ist, ergibt sich eine schnellere Ausregelung des Phasenfehlers. Dies gilt insbesondere dann, wenn der Proportionalbruchteil größer als der Integrationsbruch teil ist.

Wenn der Phasenregler den Taktgeber nur dann nachregelt, wenn der Absolutwert des momentanen Phasenfehlers einen Maximalfehler nicht übersteigt, bewirken Verzögerungen der Synchronisationssignale durch azyklische Telegramme keine fehlerhafte Nachregelung des Taktgebers.

Wenn bei Übersteigen des Maximalfehlers ein Zähler hochgezählt wird, ist insbesondere ein dauerhafter Fehler der Kommunikation zwischen Sendeeinheit und Empfangseinheit erkennbar.

Wenn der phasenverriegelten Schleife von einer Steuereinheit ein Gültigkeitssignal übermittelt wird und das Synchronisierverfahren nur bei Vorliegen des Gültigkeitssignals ausgeführt wird, ist sicherzustellen, dass die Synchronisation auf die richtigen Synchronisationssignale erfolgt.

Wenn innerhalb des Taktgebers ein Taktgenerator Primärtaktsignale erzeugt, die einem Frequenzteiler zugeführt werden, der ausgangsseitig die heruntergeteilten Primärtaktsignale als Taktsignale ausgibt, ist gewährleistet, dass alle zwischen dem Taktgenerator und dem Frequenzteiler angeordneten Komponenten ebenfalls phasenrichtig synchronisiert sind.

Wenn vor der Ermittlung des ersten momentanen Phasenfehlers der Taktgeber die Sollanzahl von Taktsignalen ausgibt, dann angehalten wird und beim Empfang des nächsten Synchronisationssignals wieder gestartet wird, ergibt sich eine besonders schnelle Synchronisation der Empfangseinheit beim Anlauf.

Wenn beim Empfang des ersten Synchronisationssignals nach dem Wiederstarten des Taktgebers der momentane Phasenfehler zumindest im wesentlichen ausgeregelt wird und das Aufintegrieren der momentanen Phasenfehler und das Ausregeln des Integrationswerts, ggf. auch das Ausregeln des momentanen Phasenfehlers, erst ab dem Empfang des zweiten Synchronisationssignals ausgeführt wird, wird die Synchronisierung zu Beginn des Verfahrens noch weiter beschleunigt.

Das von dem Phasenregler der phasenverriegelten Schleife 6 (PLL) erzeugte stabile Taktsignal Z wird erfindungsgemäß jedoch nur als Zwischensignal b benutzt. Für die eigentliche durch die Empfangseinheit 2 am Bussystem 3 betriebene Applikation 4 wird ein weiteres stets vorhandenes Taktsignal a erzeugt. Dies geschieht mittels eines weiteren Taktgebers 7', der wie der erste Taktgeber 7, ebenfalls über einen Taktgenerator 8' zur Erzeugung zweiter Primärtaktsignale und einen nachgeschalteten Frequenzteiler 9'. Mit dessen Ausgangssignalen wird ein nachgeschalteter Taktsignalzähler 10' beaufschlagt. Die Funktionsweise dieser Komponenten entspricht somit im wesentlichen der der phasenverriegelten Schleife 6.

Die Zwischensignale b am Ausgang des ersten Taktzählers 10 der verriegelten Schleife 6 und die stets vorhandenen zweiten Taktsignale a am Ausgang des weiteren Taktzählers 10' werden einem weiteren Vergleicher A zur Differenzermittlung zwischen den Taktsignalen a für die Applikation 4 und den stabilen Taktsignalen b der phasenverriegelten Schleife 6 zugeführt. Als Messergebnis wird die Differenz c als Maß für die Phasendifferenz der beiden Taktsignale a und b einer Meldeeinheit C zugeführt. Diese meldet, wenn c zu Null wird, was bedeutet, dass das Taktsignal a für die Applikation 4 zur phasenverriegelten Schleife 6 und damit zum Synchronisationssignal S des Bussystems 3 synchron ist.

Außerdem gelangt die Phasendifferenz c an eine Steuereinheit B. Diese wird zusätzlich mit dem Reglerausgang d des Phasenreglers 5 sowie einem Statussignal e beaufschlagt. Das Statussignal e liefert Informationen zum Zustand der phasenverriegelten Schleife 6, ob die PLL eingerastet und stabil ist oder aber ausgerastet, nicht stabil, abgeschaltet oder während der Anlaufphase. Ein weiteres Signal f, das zur Steuereinheit B gelangt, gibt im Bedarfsfall die Anforderung zum "weichen" Einsynchronisieren.

Für die Steuereinheit B wird nun folgende Betriebsweise gewählt:

Falls das Statussignal e signalisiert, dass die PLL 6 nicht stabil ist (ausgerastet, abgeschaltet, Anlaufphase etc.), so wird der Taktgenerator 8' mit einer vorgegebenen Standardperiodendauer angesteuert. Der Taktgenerator 8' läuft somit abgekoppelt von der PLL 6 und ermöglicht der Applikation 4 einen autonomen Weiterbetrieb ohne Unterbrechung.

Signalisiert das Statussignal e hingegen, dass die PLL 6 stabil bzw. eingerastet ist, so wird der Taktgenerator 8' mit dem Reglerausgang d des Phasenreglers 5 angesteuert, d. h. wie die phasenverriegelte Schleife 6. Damit erfolgt die Erzeugung von den Taktsignalen a und b genau gleich, d.h. auch wenn das Taktsignal b geringe Periodendauerschwankungen aufweist, bleibt die Phasendifferenz c konstant.

Wird in dem Vergleicher A eine Phasendifferenz c zwischen dem ersten Taktsignal b und dem zweiten stets vorhandenen Taktsignal a für die Applikation 4 erkannt, so wird über das Anforderungssignal f die Steuereinheit B aufgefordert, den Taktgenerator 8' mit einem geringfügig gegenüber dem Reglerausgang d modifizierten Wert anzusteuern, so dass die Phasendifferenz c allmählich abnimmt.

Durch die geringfügige Änderung der Periodendauer des für die Applikation 4 erzeugten Taktsignals a kann dieses so verändert werden, dass sich die Phasendifferenz c zwischen dem von der PLL 6 erzeugten stabilen Taktsignal b und dem für die Applikation 4 erzeugten Taktsignal a langsam ("weich") reduziert bis nach einer gewissen Zeit beide Taktsignale a, b zueinander synchron bzw. einsynchronisiert sind. Dazu muss der Phasenregler 5 (wieder) eingeschaltet sein, d.h. Takte erzeugen. Indem eine Phasendifferenz zwischen dem von der PLL 6 erzeugten stabilen Taktsignal b und dem für die Applikation 4 erzeugten Taktsignal a ständig gemessen wird, kann diese jederzeit durch gezielte Änderung der Periodendauer des für die Applikation 4 erzeugten Taktsignals a sukzessive bis auf Null ausgeglichen werden.

Beträgt die Phasendifferenz beispielsweise +1000ns, so wird nun z.B. in 100 Perioden des für die Applikation 4 erzeugten Taktsignals a die Periodendauer jeweils um 10ns verkürzt. Dadurch wird diese Phasendifferenz langsam sukzessive bis auf Null abgebaut ("weiches Einsynchronisieren").

Das Abschalten und Wiedereinschalten des von der PLL 6 erzeugten stabilen Taktsignals b hat somit keine Auswirkung auf das für die Applikation 4 erzeugte Taktsignal a. Die Applikation 4 kann ohne Unterbrechung betrieben werden.

Sofern - wie im Ausführungsbeispiel - der erste Taktgeber 7 über eine phasenverriegelte Schleife 6 geregelt wird, muss dafür gesorgt werden, dass sich die gemessene Phasendifferenz c nicht auf Grund des Regelverhaltens der PLL 6 von Messung zu Messung verändert, damit die Steuereinheit B den zweiten Taktgeber 7' so ansteuern kann, dass die Phasendifferenz c gezielt reduziert werden kann.

Um dies zu erreichen werden die Schwankungen der Periodendauer des von der PLL 6 erzeugten stabilen Taktsignals b - aufgrund des unvermeidlichen Regelverhaltens der PLL 6 - auch im für die Applikation 4 erzeugten Taktsignal a abgebildet, sofern der Phasenregler 5 nicht gerade abgeschaltet ist.

D.h. die von der PLL 6 von Takt zu Takt ermittelten Korrekturen der Periodendauer werden sowohl in dem von der PLL 6 erzeugten stabilen Taktsignal b als auch in dem für die Applikation 4 erzeugten Taktsignal a berücksichtigt. Damit bleibt die Phasendifferenz c konstant, wenn die Steuereinheit B nur den Reglerausgang d an den zweiten Taktgeber 7' weitergibt.

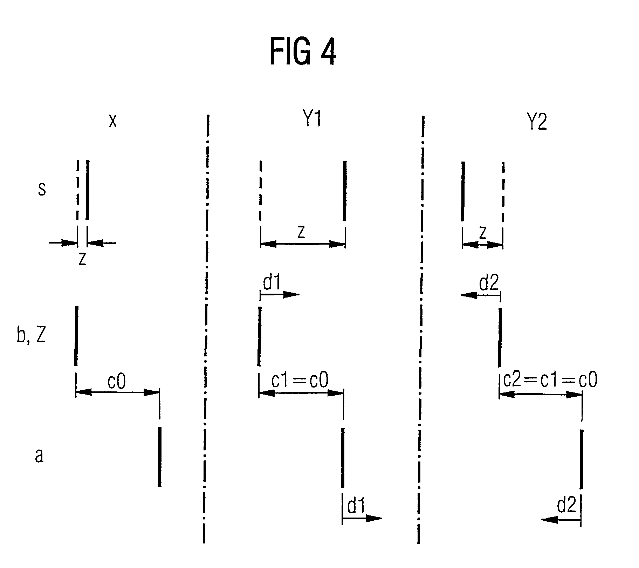

Dieser Zusammenhang ist in der Darstellung nach FIG 4 gezeigt. Dazu sind verschiedene Fälle X, Y und Z dargestellt, wobei als Signale übereinander aufgetragen sind: empfangenes Synchronisationssignal S, von der PLL 6 erzeugtes stabiles Taktsignal b und für die Applikation 4 erzeugtes stets vorhandenes Taktsignal a.

Der Fall X zeigt eine Situation, in der das Synchronisationssignal S mit geringem Jitter z (Abweichungen vom idealen erwarteten Taktzeitpunkt) behaftet ist. Dies ist angedeutet, indem das tatsächliche Taktsignal (durchgehende Linie) leicht neben einem gepunktet skizzierten idealen erwarteten Taktzeitpunkt liegt. Das von der PLL 6 generierte stabile Taktsignal b liegt dann nahezu exakt auf dem erwarteten Taktzeitpunkt. Das für die Applikation 4 erzeugte Taktsignal a liegt dann mit einer eventuellen konstanten Phasendifferenz c0 neben dem idealen exakten Taktzeitpunkt.

Im Fall Y1 oder Y2 weist das Synchronisationssignal S großen Jitter z auf. Dies hat für die PLL 6 zur Folge, dass diese ein starkes internes Regelverhalten d1 oder d2 an den Tag legt, um ein zum Synchronisationssignal S synchrones Taktsignal b zu generieren. Dies würde sich nun negativ auf das um eine Phasendifferenz c verschobene Taktsignal a auswirken, weil aufgrund des Regelverhaltens der PLL 6 diese Phasendifferenz c nicht konstant bleiben würde, sondern sich ebenfalls entsprechend dem Regelverhalten der PLL 6 ändern würde. Da jedoch die Steuereinheit B bei der Ansteuerung des zweiten Taktgebers 7' den Reglerausgang d berücksichtigt, bleibt die Phasendifferenz c konstant C0. Das PLL-Regelverhalten geht also über auf den Applikationstakt a.

Indem in den Fällen Y1 und Y2 nun die Schwingungen des Reglerausgangs d auf das endgültige Taktsignal a für die Applikation 4 abgebildet werden, verhält sich dieses Taktsignal a genau gleich wie das erste Taktsignal b der PLL 6. Dadurch ergibt sich eine definierte Phasendifferenz c zwischen den Taktsignalen a und b. Beide Taktsignale a, b sehen damit identisch aus und sind lediglich um eine feste Phasenverschiebung gegeneinander zeitlich versetzt. Bezogen auf diese Taktsignale kann dann problemlos das oben beschriebene "weiche Einsynchronisieren" erfolgen.

Die Lösung des Problems kann grundsätzlich auch dadurch erfolgen, dass das für die Applikation 4 erzeugte Taktsignal a direkt auf das empfangene Taktsignal b oder das Synchronisationssignal S geregelt wird. Dies hat jedoch folgende Nachteile:

Das "weiche Einsynchronisieren" muss durch einen Begrenzer in der Stellgröße des Reglers 5 (= von der PLL ermittelten Korrekturen) erfolgen. Diese Nichtlinearität stellt eine Verkomplizierung des Regelkreises dar. Sie muss regelungstechnisch untersucht und im Regelkreis berücksichtigt werden (z.B. durch zusätzliche Begrenzer beim Integral-Anteil des Reglers).

Die PLL 6 ist im Anwendungsfall für einen PROFIBUS zum Ausregeln von Phasendifferenzen von ca. 1µs ausgelegt (Größenordnung des maximalen Jitters). Die Regelparameter der PLL 6 sind deshalb sehr langsam bzw. "weich" eingestellt, um den Jitter zu filtern. Die beim "weichen Einsynchronisieren" auftretenden Phasenverschiebungen c liegen jedoch im Bereich von ms. Deshalb wären zunächst andere, schnellere und damit "härtere" Regelparameter nötig. Eine Umschaltung zwischen diesen beiden Regelparametersätzen würde wiederum eine weitere Nichtlinearität des Regelkreises darstellen, was wiederum eine Verkomplizierung des Regelkreises darstellt. Dies müsste wiederum regelungstechnisch untersucht und die erforderlichen Konsequenzen abgeleitet werden.

Es müsste regelungstechnisch berücksichtigt werden, dass die Phasendifferenzen c in der Größenordnung der Taktperiodendauern liegen. Je nach Regelverhalten könnten sich die beiden betrachteten Takte gegenseitig "überholen", was zu Sprüngen in der Phasendifferenzmessung A führen könnte. Dies stellt wiederum eine Nichtlinearität dar, deren Folgen untersucht werden müssten.

Alle diese Punkte stellen erhöhte Aufwände ohne Vorteil gegenüber der gesteuerten Lösung nach der vorliegenden Erfindung dar. Die Reduktion der Problemstellung auf eine Steuerung statt eine Regelung ermöglicht demgegenüber eine wesentliche Vereinfachung.

Mit dem erfindungsgemäßen Verfahren lassen sich insbesondere auch verteilt gesteuerte interpolierende Achsen mit hinreichender Genauigkeit ansteuern.

## Patentansprüche

1. Synchronisierverfahren für eine Empfangseinheit (2),
- wobei der Empfangseinheit (2) von einer Sendeeinheit (1) zyklisch ausgesandte Synchronisationssignale (S) übermittelt werden,
- wobei die Empfangseinheit (2) die Synchronisationssignale (S) einem ersten Taktgeber (7) zuführt,
- wobei der erste Taktgeber (7) zwischen zwei Synchronisationssignalen (S) eine im wesentlichen stabile Anzahl von Taktsignalen (b bzw. Z) ausgibt,
- wobei diese stabilen Taktsignale (b bzw. Z) einem zweiten Taktgeber (7') zur Ansteuerung dienen,
- wobei eine zwischen dem ersten (7) und zweiten Taktgeber (7') auftretende Phasendifferenz (c) durch Beeinflussung der Periodendauer des zweiten Taktgebers (7') ausgeglichen wird
**dadurch gekennzeichnet, dass** der zweite Taktgeber (7') im Falle des Ausbleibens des ersten stabilen Taktsignals (b bzw. Z) vom ersten Taktgeber (7) abgekoppelt wird, indem der zweite Taktgeber (7') mit einer vorgegebenen Standardperiodendauer angesteuert wird und so ein auch bei Ausbleiben der ersten stabilen Taktsignale (b bzw. Z) stets vorhandenes zweites Taktsignal (a) generiert.

2. Synchronisierverfahren für eine Empfangseinheit nach Anspruch 1, **dadurch gekennzeichnet, dass** lediglich geringfügige Änderungen der Periodendauer des zweiten Taktgebers (7') so vorgenommen werden, dass die Phasendifferenz (c) innerhalb einer vorgegebenen Zeitdauer stetig verkleinert wird bis das erste (b bzw. Z) und das zweite Taktsignal (a) zueinander synchron sind.

3. Synchronisierverfahren für eine Empfangseinheit nach Anspruch 1 oder 2, **dadurch gekennzeichnet, dass** die Periodendauer des zweiten Taktgebers (7') so beeinflusst wird, dass der kürzere Abstand der Phasen der beiden Taktsignale (a, b) reduziert wird.

4. Synchronisierverfahren für eine Empfangseinheit nach einem der Ansprüche 1 bis 3,
- wobei die Empfangseinheit (2) die Synchronisationssignale (S) dem ersten Taktgeber (7) über einen Phasenregler (5) einer phasenverriegelten Schleife (6) zuführt,
- wobei der Phasenregler (5) beim Empfang der Synchronisationssignale (S) momentane Phasenfehler (z) ermittelt und den ersten Taktgeber (7) derart nachregelt, dass der erste Taktgeber (7) zwischen zwei Synchronisationssignalen (S) eine Sollanzahl (Z*) von Taktsignalen ausgibt,
**dadurch gekennzeichnet, dass** vom Phasenregler (5) ausgeregelte Schwankungen der Periodendauer des ersten Taktgebers (7) auf den zweiten Taktgeber (7') abgebildet werden.

5. Synchronisierverfahren für eine Empfangseinheit nach Anspruch 4, **dadurch gekennzeichnet, dass** die vom Phasenregler (5) von Takt zu Takt ermittelten Korrekturen (d) der Periodendauer des ersten Taktgebers (7) sowohl in dem ersten stabilen Taktsignal (b bzw. Z) als auch in dem stets vorhandenen zweiten Taktsignal (a) berücksichtigt werden.

6. Empfangseinheit (2), - wobei die Empfangseinheit (2) einen ersten Taktgeber (7) und einen zweiten Taktgeber (7') umfasst,
- wobei die Empfangseinheit (2) zyklisch ausgesandte Synchronisationssignale (S) erhält,
- wobei die Empfangseinheit (2) die Synchronisationssignale (S) dem ersten Taktgeber (7) zuführt,
- wobei der erste Taktgeber (7) zwischen zwei Synchronisationssignalen (S) eine im wesentlichen stabile Anzahl von Taktsignalen (b bzw. Z) ausgibt,
- wobei diese stabilen Taktsignale (b bzw. Z) dem zweiten Taktgeber (7') zur Ansteuerung dienen,
- wobei eine zwischen dem ersten (7) und zweiten Taktgeber (7') auftretende Phasendifferenz (c) durch Beeinflussung der Periodendauer des zweiten Taktgebers (7') ausgeglichen wird
**dadurch gekennzeichnet, dass** der zweite Taktgeber (7') im Falle des Ausbleibens des ersten stabilen Taktsignals (b bzw. Z) vom ersten Taktgeber (7) abgekoppelt wird, indem der zweite Taktgeber (7') mit einer vorgegebenen Standardperiodendauer angesteuert wird und so ein auch bei Ausbleiben der ersten stabilen Taktsignale (b bzw. Z) stets vorhandenes zweites Taktsignal (a) generiert.

## Claims

1. Synchronization method for a receiver unit (2),
- where cyclic synchronization signals (S) are transferred to the receiver unit (2) from a transmitter unit (1),
- where the receiver unit (2) directs the synchronization signals (S) to a first clock generation unit (7),
- where the first clock generation unit (7) outputs an essentially stable number of clock signals (b or Z) between two synchronization signals (S)
- where these stable clock signals (b or Z) are used for activation of a second clock generation unit (7'),
- where a phase difference (c) occurring between the first (7) and the second clock generation unit (7') is compensated for by influencing the period length of the second clock generation unit (7')
**characterized in that** the second clock generation unit (7'), in the event of the absence of the first stable clock signal (b or Z), is decoupled from the first clock generation unit (7) by activating the second clock generation unit (7') with a prespecified standard period length and thus generates a second clock signal that is constantly available (a) even if the first stable clock signals (b or Z) are absent.

2. Synchronization method for a receiver unit in accordance with Claim 1, **characterized in that** only slight changes to the period length of the second clock generation unit (7') are undertaken so that the phase difference (c) within a specified time is constantly reduced until the first (b or Z) and the second clock signal (a) are synchronous to each other.

3. Synchronization method for a receiver unit in accordance with Claim 1 or 2, **characterized in that** the period length of the second clock generation unit (7') is influenced so that the shorter gap of the phases of the two clock signals (a, b) is reduced.

4. Synchronization method for a receiver unit in accordance with one of the Claims 1 to 3,
- where the receiver unit (2) directs the synchronization signals (S) to the first clock generation unit (7) via a phase shifter (5) of a phase-locked loop (6),
- where the phase shifter (5) on receiving the synchronization signals (S) determines instantaneous phase errors (z) and adjusts the first clock generation unit (7) such that the first clock generation unit (7) outputs a required number (Z*) of clock signals between two synchronization signals (S),
**characterized in that** variations in the period length removed by the phase shifter (5) are mapped by the first clock generation unit (7) to the second clock generation unit (7').

5. Synchronization method for a receiver unit in accordance with Claim 4, **characterized in that** the corrections (d) of the period length determined by the phase shifter (5) from clock to clock are taken into account by the first clock generation unit (7) both in the first stable clock signal (b or Z) and also in the constantly available second clock signal (a).

6. Receiver unit
- where the receiver unit (2) receives synchronization signals (S) sent out cyclically
- where the receiver unit (2) directs the synchronization signals (S) to the clock generation unit (7),
- where the first clock generation unit (7) outputs an essentially stable number of clock signals (b or Z) between two synchronization signals (S),
- where these stable clock signals (b or Z) are used to activate the second clock generation unit (7'),
- where the receiver unit (2) comprises a first clock generation unit (7) and a second clock generation unit (7'),
- where a phase difference (c) occurring between the first (7) and second clock generation unit (7') is compensated for by influencing the period length of the second clock generation unit (7')
**characterized in that** the second clock generation unit (7'), in the event of the absence of the first stable clock signal (b or Z), is decoupled from the first clock generation unit (7) by activating the second clock generation unit (7') with a prespecified standard period length and thus generates a second clock signal that is always present (a) even if the first stable clock signals (b or Z) are absent.

## Revendications

1. Procédé de synchronisation pour une unité de réception (2), dans lequel
- des signaux de synchronisation (S) émis cycliquement par une unité d'émission (1) sont transmis à l'unité de réception (2),
- l'unité de réception (2) envoie les signaux de synchronisation (S) à un premier générateur d'horloge (7),
- le premier générateur d'horloge (7) fournit entre deux signaux de synchronisation (S) un nombre globalement stable de signaux d'horloge (b ou Z),
- ces signaux d'horloge stables (b ou Z) servent à un deuxième générateur d'horloge (7') pour la commande,
- une différence de phase (c) apparaissant entre le premier générateur d'horloge (7) et le deuxième générateur d'horloge (7') est compensée en influençant la durée de période du deuxième générateur d'horloge (7'),
**caractérisé par le fait que** le deuxième générateur d'horloge (7') en l'absence du premier signal d'horloge stable (*b* ou Z) est découplé du premier générateur d'horloge (7), le deuxième générateur d'horloge (7') étant commandé alors avec une durée de période standard prédéterminée et produisant ainsi un deuxième signal d'horloge (*a*) toujours présent même en l'absence des premiers signaux d'horloge stables (*b* ou Z).

2. Procédé de synchronisation pour une unité de réception selon la revendication 1, **caractérisé par le fait qu'**on effectue simplement de légères modifications de la durée de période du deuxième générateur d'horloge (7') de telle sorte que la différence de phase (*c*) est réduite en continu en un temps prédéterminé jusqu'à ce que le premier signal d'horloge (*b* ou Z) et le deuxième signal d'horloge (*a*) soient synchrones l'un avec l'autre.

3. Procédé de synchronisation pour une unité de réception selon la revendication 1 ou 2, **caractérisé par le fait qu'**on influence la durée de période du deuxième générateur d'horloge (7') de manière à réduire la plus courte distance entre les phases des deux signaux d'horloge (*a*, *b*).

4. Procédé de synchronisation pour une unité de réception selon l'une des revendications 1 à 3, dans lequel
- l'unité de réception (2) envoie les signaux de synchronisation (S) au premier générateur d'horloge (7) par l'intermédiaire d'un régulateur de phase (5) d'une boucle à verrouillage de phase (6),
- le régulateur de phase (5) lors de la réception des signaux de synchronisation (S) détermine des erreurs de phase momentanées (z) et post-régule le premier générateur d'horloge (7) de telle sorte que le premier générateur d'horloge (7) fournit entre deux signaux de synchronisation (S) un nombre de consigne (Z*) de signaux d'horloge,
**caractérisé par le fait que** des variations de la durée de période du premier générateur d'horloge (7) qui sont éliminées par régulation par le régulateur de phase (5) sont reproduites sur le deuxième générateur d'horloge (7').

5. Procédé de synchronisation pour une unité de réception selon la revendication 4, **caractérisé par le fait que** les corrections (d) de la durée de période du premier générateur d'horloge (7) qui sont déterminées de cycle en cycle par le régulateur de phase (5) sont prises en compte aussi bien dans le premier signal d'horloge stable (*b* ou Z) que dans le deuxième signal d'horloge (*a*) toujours présent.

6. Unité de réception (2) telle que
- l'unité de réception (2) comprend un premier générateur d'horloge (7) et un deuxième générateur d'horloge (7'),
- l'unité de réception (2) reçoit des signaux de synchronisation (S) émis de façon cyclique,
- l'unité de réception (2) envoie les signaux de synchronisation (S) au premier générateur d'horloge (7),
- le premier générateur d'horloge (7) fournit entre deux signaux de synchronisation (S) un nombre globalement stable de signaux d'horloge (*b* ou Z),
- ces signaux d'horloge stables (*b* ou Z) servent au deuxième générateur d'horloge (7') pour la commande,
- une différence de phase (*c*) apparaissant entre le premier (7) et le deuxième générateur d'horloge (7') est compensée en influençant la durée de période du deuxième générateur d'horloge (7'),
**caractérisé par le fait que** le deuxième générateur d'horloge (7') en l'absence du premier signal d'horloge stable (*b* ou Z) est découplé du premier générateur d'horloge (7), le deuxième générateur d'horloge (7') étant commandé alors avec une durée de période standard prédéterminée et produisant ainsi un deuxième signal d'horloge (*a*) toujours présent même en l'absence des premiers signaux d'horloge stables (*b* ou Z).
